(19)

**Europäisches Patentamt**

**European Patent Office**

**Office européen des brevets**

(11) **EP 4 230 769 A1**

(12) **EUROPEAN PATENT APPLICATION**

(43) Date of publication:
**23.08.2023 Bulletin 2023/34**

(21) Application number: **22156970.0**

(22) Date of filing: **16.02.2022**

(51) International Patent Classification (IPC):
$C25B\ 1/04$ *(2021.01)*      $C25B\ 9/70$ *(2021.01)*
$C25B\ 15/023$ *(2021.01)*      $C25B\ 15/02$ *(2021.01)*
$G06Q\ 50/00$ *(2012.01)*

(52) Cooperative Patent Classification (CPC):
**C25B 9/70; C25B 1/04; C25B 15/023; F03D 7/02;
F03D 9/19; G06Q 10/063; G06Q 50/06;**
F05B 2220/61; F05B 2270/303; F05B 2270/335

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S
7330 Brande (DK)**

(72) Inventor: **GKOUNTARAS, Aris
22299 Hamburg (DE)**

(74) Representative: **SGRE-Association
Siemens Gamesa Renewable
Energy GmbH & Co KG
Schlierseestraße 28
81539 München (DE)**

(54) **METHOD OF OPERATING A WIND-POWERED ELECTROLYSIS PLANT**

(57) The invention describes a method of operating a wind-powered electrolysis plant (1) comprising a wind turbine and an electrolyser stack (120), which method comprises the steps of obtaining a mathematical relationship between DC stack voltage ($V_{DC}$) and available wind turbine output power ($P_{WT}$) for each temperature in a range of stack temperatures (ST1, ..., ST6); determining the momentary output power ($P_{WT\_now}$) of the wind turbine; determining the momentary stack temperature ($T_{now}$) of the electrolyser stack (120); identifying the optimum DC stack voltage ($V_{DC\_best}$) for that momentary output power ($P_{WT\_now}$) and momentary stack temperature ($T_{now}$); and regulating a converter arrangement (13) to apply the identified optimum stack voltage ($V_{DC\_best}$) to the electrolyser stack (120).

FIG 1

EP 4 230 769 A1

**Description**

Background

Wind energy can be used to drive a water electrolysis plant in order to produce "green" hydrogen, which can then be used as a clean source of fuel, for example. Offshore wind energy plants are particularly suitable for this purpose. An electrolysis stack - comprising any number of electrolytic cells - requires a DV voltage across its input terminals. However, a wind turbine generates AC power, and the output power fluctuates according to the wind conditions. Generally, a wind turbine controller receives information regarding the wind speed, wind direction and various other parameters, and determines suitable references and forwards these to the relevant components such as a pitch system, yaw system, power converter etc., in order to maximise the output power.

To drive an electrolysis stack using wind power, an AC-DC converter arrangement is used to convert the wind turbine AC power to DC power. In a prior art wind-driven electrolysis plant, the generator control task and the stack control task are realised independently of each other. As a result, the output voltage of the AC-DC converter arrangement (i.e. the DC voltage or "stack voltage" at the input terminals of the electrolysis stack) may differ from an optimal value due to delays that are incurred as the stack controller attempts to correct the stack voltage in response to a change in wind turbine output power. As a result, wind energy is "lost" and the electrolysis stack of the prior art wind-driven electrolysis plant does not operate at its full potential.

It is therefore an object of the invention to provide an improved way of using wind energy to drive an electrolysis plant.

This object is achieved by the claimed method of operating a wind-powered electrolysis plant and by the claimed wind-powered electrolysis plant.

Description

In the context of the invention, a wind-powered electrolysis plant shall be understood to comprise a wind turbine and one or more electrolyser stacks.

According to the invention, the method of operating such a wind-powered electrolysis plant comprises the steps of obtaining a mathematical relationship between DC stack voltage and available wind turbine output power for each temperature in a range of stack temperatures; determining the momentary output power of the wind turbine; determining the momentary stack temperature of the electrolyser stack; and identifying the DC stack voltage for that momentary output power and momentary stack temperature. The inventive method comprises a subsequent step of regulating a converter arrangement to apply the identified DC stack voltage to the electrolyser stack.

An advantage of the inventive method is that the wind-powered electrolysis plant can be operated in such a way as to always drive an electrolyser stack at the most appropriate voltage, thereby exploiting the available wind energy to the full. In the inventive method, the "unified" voltage control is realized at the converter level, and ensures that the stack voltage advantageously follows wind speed variations in the most robust and efficient manner.

According to the invention, in addition to the wind turbine and the electrolyser stack, the wind-powered electrolysis plant comprises a converter arrangement configured to convert AC output power of the wind turbine to DC input power for the electrolyser stack; and a controller configured to perform steps of the inventive method to operate the wind-powered electrolysis plant.

The object of the invention is also achieved by a computer program product with a computer program that is directly loadable into the memory of a controller of a wind energy plant, and which comprises program units to perform the steps of the inventive method when the program is executed by the controller.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that a wind turbine is an offshore wind turbine. An electrolyser stack may be realised as any of a polymer electrolyte membrane (PEM) electrolyser, a high-pressure PEM electrolyser, a solid oxide electrolyser (SOEC), an alkaline electrolyser or any appropriate type of electrolyser.

In the context of the invention, an electrolyser stack shall be understood as a unit comprising any number of electrolytic cells, with a pair of electrodes to apply a potential across the cells. The inventive wind-powered electrolysis plant may be configured to drive an electrolysis plant comprising a single electrolyser stack, or a plurality of electrolyser stacks.

The amount of hydrogen (and oxygen) produced by an electrolyser depends on the potential across the electrodes of the stack, and also on the temperature of the water. The quantity of hydrogen produced by water electrolysis will increase as the water temperature increases. Equally, the quantity of hydrogen produced will increase as the voltage increases.

In the case of a wind turbine dedicated to generating electricity for one or more electrolyser stacks, the available power may fluctuate when wind conditions change. In the case of a wind turbine configured to export output power and also to drive one or more electrolyser stacks, the export power may be given priority. In a further preferred embodiment of the invention, a portion of the total momentary output power can be exported to the grid if the required stack voltage exceeds the capability of the converter arrangement.

The invention is based on the insight that an optimal driving voltage for an electrolyser stack (or simply "stack") can be chosen when the temperature in the electrolyser stack is known. This principle is particularly significant when an electrolyser stack is powered by a fluctuating energy source such as wind energy. To this end, an initial step comprises establishing a mathematical relationship between DC stack voltage and available wind turbine output power for each temperature in a range of stack temperatures. Such a relationship may be referred to in the following as the voltage/power function for an electrolyser stack temperature.

For example, a voltage/power function for an electrolyser stack temperature $T_i$ can be expressed as:

$$V_{DC}(T_i) = F \times \sqrt[4]{P_{WT}} + V_{DC\_min}(T_i) \qquad (1)$$

where $T_i$ is a stack temperature, F is a multiplication factor determined by the stack characteristics, and $P_{WT}$ is the wind turbine power output. The voltage/power curve commences on the Y-axis at the relevant offset $V_{DC\_min}$ for that stack temperature $T_i$, and terminates at a point determined by the maximum output power $P_{max}$ of the wind turbine. A set of such curves can be established in advance from empirical data, for example. For each stack temperature $T_i$ of the set, the corresponding Y-axis offset $V_{DC\_min}(T_i)$ is provided to the wind turbine controller. The Y-axis offset $V_{DC\_min}(T_i)$ may be expected to increase according to the age of the electrolyzer stack, reaching a maximum at the end of the electrolyzer stack lifetime.

During operation of the inventive wind-powered electrolysis plant, the optimum stack voltage $V_{DC\_best}$ to apply at the terminals of the stack can then be determined at any one time from the momentary stack temperature $T_{now}$ and the momentarily available wind power $P_{WT\_now}$:

$$V_{DC\_bsst} = F \times \sqrt[4]{P_{WT\_now}} + V_{DC\_min}(T_{now}) \qquad (2)$$

where $P_{WT\_now}$ is the momentarily available wind power and $T_{now}$ is the momentary stack temperature. A suitable Y-axis offset $V_{DC\_min}$, i.e. the initial voltage at zero power, is identified for that momentary stack temperature $T_{now}$. In the case that the momentary stack temperature $T_{now}$ matches a stack temperature of one of the set of curves described above, the values (factor F, momentary $P_{WT\_now}$ and Y-axis offset $V_{DC\_min}$ for the momentary stack temperature $T_{now}$) can be plugged into the equation to compute the optimum stack voltage $V_{DC\_best}$.

Otherwise, the momentary stack temperature can be rounded up or down to the nearest value $T_i$ in the discrete set, and the best-match Y-axis offset $V_{DC\_min}$ for the rounded stack temperature is identified. These values are then plugged into the equation to compute the optimum stack voltage $V_{DC\_best}$. To obtain a more accurate result, two computations can be performed: one in which the momentary stack temperature is rounded up to the next highest stack temperature in the set, and one in which the momentary stack temperature is rounded down to the next lowest stack temperature in the set. Two values of DC stack voltage are obtained, and a value halfway between these can be chosen as the optimum stack voltage $V_{DC\_best}$.

In the above equations, F is a multiplication factor which can lie in the range of 5 to 10, and the voltage/power curves are described by a 4th root term. Of course, a set of such voltage/power curves may be established using different mathematical relationships and multiplication factors, depending on stack characteristics.

In a preferred embodiment of the invention, the range of stack temperatures extends between a minimum stack voltage (the decomposition potential of that stack) required by a new stack, and a maximum stack voltage (the voltage required to absorb rated power of the stack) required towards the end of the stack lifetime. The minimum and maximum stack voltages increase gradually during the lifetime of the stack as mentioned above. This means that the minimum stack voltage for a voltage/power curve of a "young" stack is lower than the minimum stack voltage for a voltage/power curve of an "old" stack. The same applies to the maximum stack voltage.

The accuracy of the inventive method can be increased by providing a suitably large number of voltage/power functions within that range, for example at least 8, more preferably at least 16. In a preferred embodiment of the invention, the voltage/power functions are established on the basis of empirical data.

An electrolysis plant of the type under discussion herein may comprise various auxiliaries such as one or more water pumps, one or more desalination units, additional power converters for these devices, etc. During operation of the wind-powered electrolysis plant, these auxiliaries may have fluctuating power requirements. Therefore, in a further preferred embodiment of the invention, the voltage/power functions are adjusted according to the requirements of further components of the electrolyser stack arrangement during operation of the wind-powered electrolysis plant.

The invention is based on the insight that the maximum DC voltage that can be applied to the wind-driven electrolysis stack at any one time is determined not only by the capability of the stack at that time (e.g. its stack temperature), but also on the capability of the converter arrangement. In a particularly preferred embodiment of the invention, the optimum DC voltage is the highest voltage that can be delivered by the converter components (AC-DC rectifier, DC-DC converter etc.) at that time. The optimum DC voltage may be chosen to ensure that the converter components are not overloaded, thereby avoiding converter failure.

The inventive wind-powered electrolysis plant can be equipped with a temperature sensing arrangement, for example a number of temperature sensors, where each temperature sensor is configured to measure the temperature of a specific electrolyser stack.

Because of the fluctuating nature of wind, the available wind power for driving the electrolyser stacks of the inventive wind-powered electrolysis plant may also fluctuate. Equally, as indicated above, export power may be accorded priority, leaving less power available to drive the electrolyser stacks. The controller of the inventive wind-powered electrolysis plant determines the available wind power.

With the relevant information for each electrolyser stack - namely the stack temperature and the available power - the controller can identify an optimal DC voltage for each electrolyser stack at any one time. The controller can continuously monitor the available power and the electrolyser stack temperature(s), and can adjust the stack voltage(s) accordingly. In this way, each electrolyser stack is always optimally driven to maximise the quantity of hydrogen (and oxygen) produced even with a fluctuating power supply.

Various configurations are possible to realise the invention. For example, in one embodiment, the converter arrangement comprises an AC-DC rectifier adapted to convert the AC output power of the wind turbine to a DC stack voltage. Such a configuration may be preferred when a minimum number of components and converters is desired.

In an alternative embodiment, the converter arrangement comprises an AC-DC rectifier adapted to convert AC output power of the wind turbine to an interim DC voltage, and a DC-DC converter adapted to convert the interim DC voltage to an identified DC stack voltage. Such a configuration may be preferred when it is known that the rectifier output DC voltage will be unable to match the required DC stack voltage. A suitable DC-DC converter is arranged to shift the rectifier DC voltage to the required level. Such a configuration may be preferred also when the electrolyzer input voltage and the wind turbine generator voltage will follow different voltage profiles for optimal efficiency of performance, or to achieve favourably long lifetimes for the relevant components.

In a further preferred embodiment of the invention, the wind-powered electrolysis plant is designed so that the converter output will deliver the highest expected DC stack voltage required by the electrolyser towards the end of its lifetime. To this end, the highest stack temperature expected during the stack lifetime is determined, and this highest stack temperature in turn determines the highest DC stack voltage that will be required towards the end of the lifetime of that stack. Designing the converter arrangement to achieve the expected capacity may add the cost of manufacture, but such costs are outweighed by the benefit of full exploitation of the available wind energy towards the end of the electrolyser lifetime. This aspect is particularly relevant in the case of an off-grid wind-powered electrolysis plant because it allows the available wind energy to be fully exploited. In a prior art off-grid wind-powered electrolysis plant with a converter that cannot deliver the high DC stack voltage required by an electrolyser towards the end of its lifetime, the power output of the wind turbine must be curtailed in order to avoid damage to the converter.

An offshore wind-powered electrolysis plant may be realised as a "stand-alone" installation, without any connection to an electricity grid. The wind turbines of such an offshore installation are not realised to export power, and serve primarily to drive electrolyser stacks. However, in low-wind conditions or during maintenance routines, the wind turbines may be unable to generate power. Therefore, in a preferred embodiment of the invention, the inventive electrolysis plant further comprises a standby power supply adapted to provide power to the electrolyser stack arrangement in the absence of available wind turbine output power. Such a standby power supply can comprise any of: a battery, a supercapacitor, a fuel cell.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 illustrates a relationship between available wind power, stack temperature and stack voltage for an electrolysis unit in an embodiment of the invention;

Figures 2 - 6 illustrate exemplary embodiments of the inventive wind-powered electrolysis plant;

Figure 7 illustrates a relationship between available wind power, stack temperature and stack voltage for an electrolysis unit in a further embodiment of the invention.

In the diagrams, like numbers refer to like objects throughout. Objects in the diagrams are not necessarily drawn to scale.

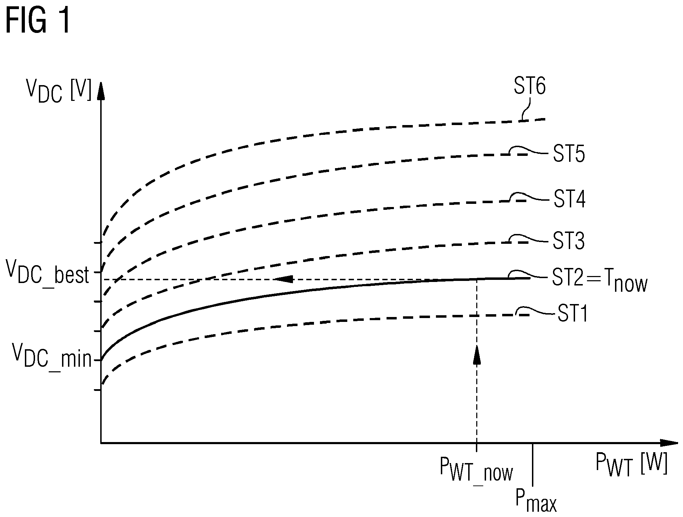

Figure 1 illustrates a relationship between stack voltage $V_{DC}$ (Y-axis), available wind power $P_{WT}$ (X-axis), and stack temperature for a specific electrolysis stack. A set of temperature curves ST1 - ST6 has been established previously, for example from empirical data collected during operation of a test installation, and each curve is defined by equation (1) explained above. The temperature curves ST1 - ST6 for that stack are established over a range that reflects the minimum and maximum stack voltages over the lifetime of the electrolysis stack. While only six voltage/power curves are shown here for the sake of clarity, it shall be understood that there is no limit to the number of voltage/power curves that can be established for a stack. It shall also be understood that the set of voltage/power curves can be updated or adjusted on the basis of data collected during the lifetime of a stack.

During operation of the inventive wind-powered electrolysis plant, the momentarily available wind power $P_{WT\_now}$ can be established at any instant in time from the wind turbine controller as will be known to the skilled person. The stack temperature $T_{now}$ of a specific stack at that instant in time can be measured as explained above using a suitable temperature sensing arrangement. Knowing the available wind power $P_{WT\_now}$ (for example 80% of the wind turbine's maximum power $P_{max}$ as indicated here) and knowing the momentary stack temperature $T_{now}$ of that stack, the currently relevant temperature curve is identified (in this case curve ST2). From the intersection on that temperature curve, the optimum stack voltage $V_{DC\_best}$ is identified on the Y-axis. This optimum stack voltage $V_{DC\_best}$ can then be forwarded to the controller of the plant to regulate the converter, which then applies that stack voltage $V_{DC\_best}$ to that electrolyser stack.

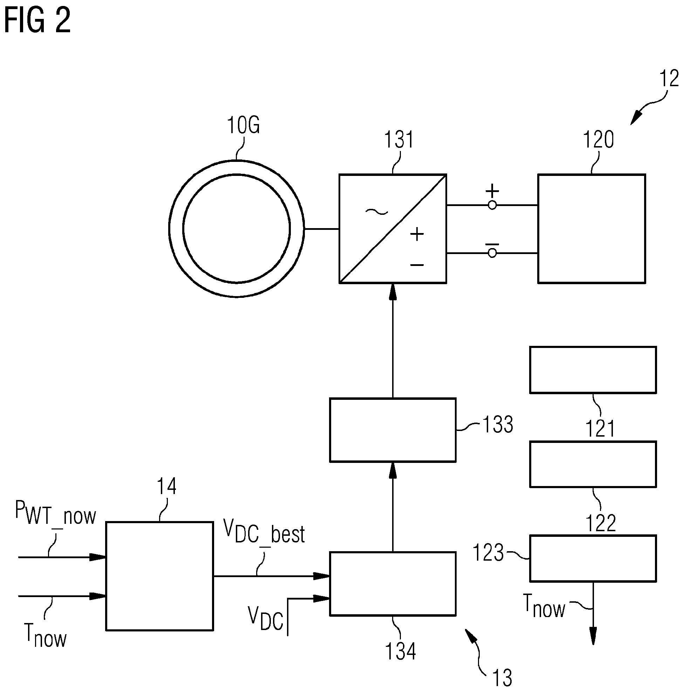

Figure 2 is a simplified schematic to illustrate an exemplary embodiment of the inventive wind-powered electrolysis plant 1. The diagram shows a generator 10G of a wind turbine, a converter arrangement 13, and an electrolysis plant 12 indicated here by an electrolyser stack 120. Here (and also in the following diagrams), the electrolysis plant 12 comprises a water pump 121 and a desalination unit 122; a further module 123 monitors the stack temperature and provides a continually updated stack temperature reading $T_{now}$ for use in the inventive method.

The wind turbine further comprises a controller 14 with various functional modules. Here, only the aspects relevant to the inventive method are explained. The controller 14 receives the momentary known power output $P_{WT\_now}$ and the momentary temperature $T_{now}$ of the stack 120. Following the principle explained in Figure 1 above, the controller 14 identifies the optimum stack voltage $V_{DC\_best}$ for that stack 120 under the present conditions.

The converter arrangement 13 in this embodiment comprises an AC-DC rectifier 131 and a current control unit 133, and a $V_{DC}$ control unit 134. The optimum stack voltage value $V_{DC\_best}$ is received by the $V_{DC}$ control unit 134 which also receives the momentary $V_{DC}$ value as input, and which issues control signals to the current control unit 133, which in turn regulates the AC-DC rectifier 131 to produce the desired voltage value $V_{DC\_best}$ at its output terminals. Such a rectifier arrangement will be known to the skilled person and need not be described in detail here. The stack 120 now receives the optimum stack voltage $V_{DC\_best}$ at its input terminals, so that the available wind energy is utilized to the full.

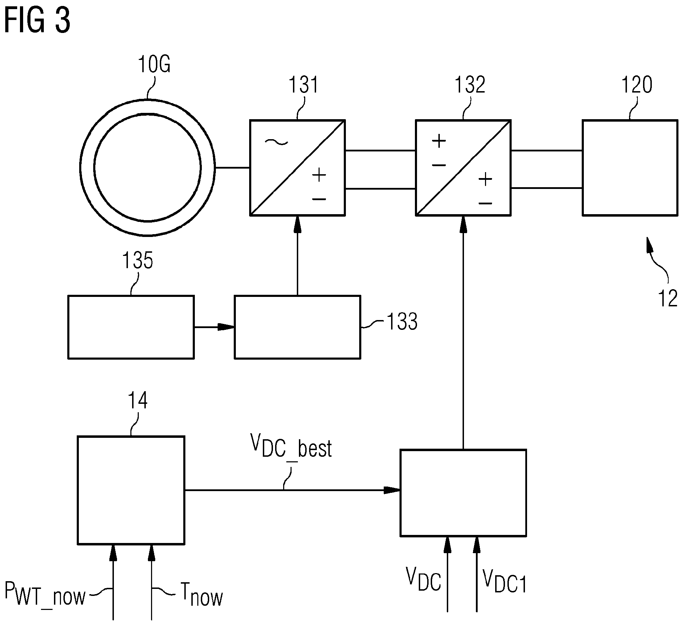

Figure 3 illustrates a further exemplary embodiment of the inventive electrolysis plant 1, similar to the embodiment of Figure 2. Here, the converter arrangement 13 comprises an AC-DC rectifier 131 and a DC-DC converter 132. A DC control unit 135 and a current control unit 133 regulate the AC-DC rectifier 131 to output a first DC voltage $V_{DC1}$.

The optimum stack voltage value $V_{DC\_best}$ is received by the $V_{DC}$ control unit 134 which also receives the momentary $V_{DC}$ value and the first DC voltage $V_{DC1}$ as input, and which issues control signals to the DC-DC converter 132 to apply the optimum stack voltage $V_{DC\_best}$ to the terminals of the electrolyser stack 120.

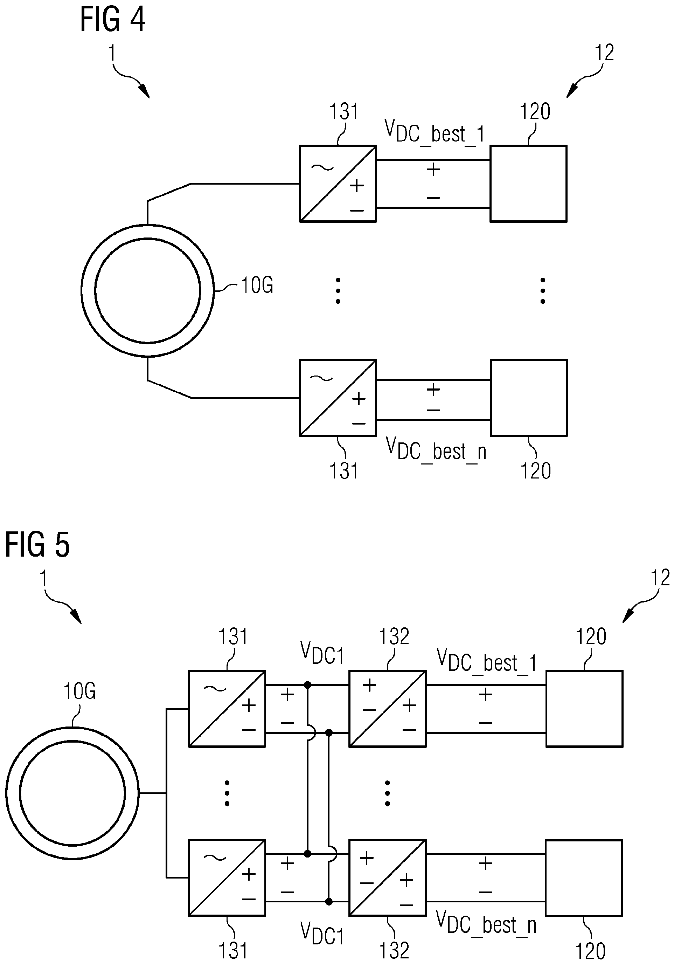

Figure 4 illustrates a further exemplary embodiment of the inventive electrolysis plant 1. Here, one wind turbine generator drives a plurality of electrolyser stacks 120. The temperatures of the stacks are measured by a suitable sensor arrangement, and the controller of the wind turbine identifies the optimum stack voltage $V_{DC\_best\_1}, \cdots, {}_{DC\_best\_n}$ for each electrolyser stack 120.

Figure 5 illustrates a further exemplary embodiment of the inventive electrolysis plant 1. Again, one wind turbine generator 10G drives a plurality of electrolyser stacks 120, and the stack voltage in each case is provided by a rectifier-converter configuration similar to Figure 3. Here, AC-DC rectifiers 131 are controlled to collectively apply the same DC voltage $V_{DC1}$ to the DC-DC converters 132. Here also, the temperatures of the stacks 120 are measured by a suitable sensor arrangement, and the controller of the wind turbine identifies the optimum stack voltage $V_{DC\_best\_1}, \cdots, V_{DC\_best\_n}$ for each electrolyser stack 120.

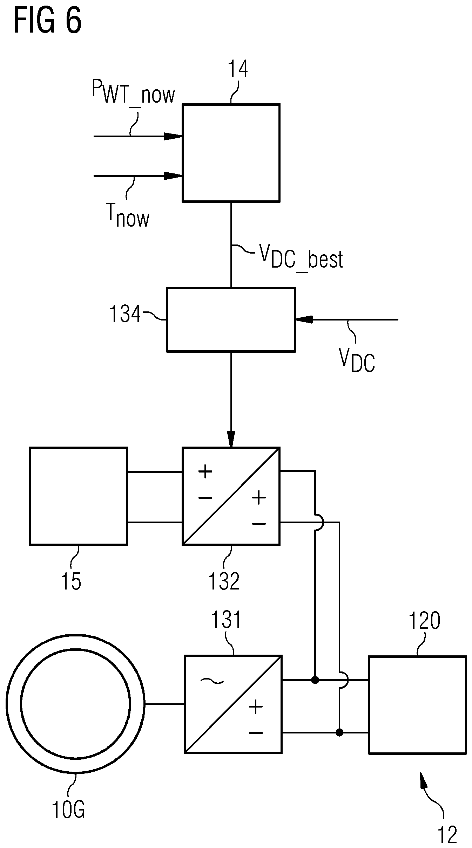

Figure 6 illustrates a further exemplary embodiment of the inventive electrolysis plant 1. Here, the installation is not connected to the grid. To enable an electrolyser stack 120 to operate even in insufficient wind conditions, the installation 1 comprises a standby power supply 15 such as a battery, a super-capacitor, a fuel cell, etc. In this case, the control arrangement 13, 14 regulates the voltage at the output of the DC-DC converter 132 so that an optimum input voltage $V_{DC\_best}$ is always applied to the terminals of the electrolyser stack 120.

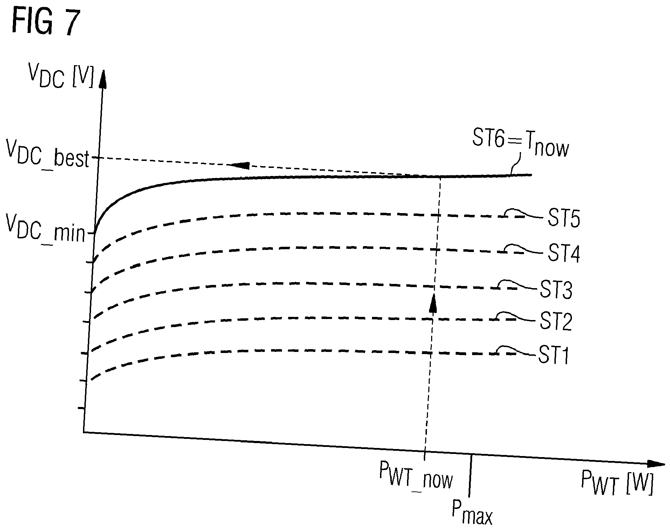

Figure 7 illustrates a relationship between stack voltage $V_{DC}$ (Y-axis), available wind power $P_{WT}$ (X-axis), and stack temperature for an electrolysis stack. As described in Figure 1, a set of temperature curves ST1 - ST6 is provided. During the lifetime of an electrolysis stack, the voltage it needs to absorb the same current tends to increase, i.e. its minimum and maximum stack voltages increase, and the stack temperature is highest towards the end of the stack's lifetime. In this case, at the same value of available output power $P_{WT\_now}$ mentioned in Figure 1, the relevant temperature curve ST6 leads to correspondingly high value for optimum DC stack voltage $V_{DC\_best}$. The inventive wind-powered electrolysis plant is designed so that the converter output can safely - i.e. without incurring damage - deliver the highest expected DC stack voltage required by the electrolyser towards the end of its lifetime.

Although the present invention has been disclosed in the form of preferred embodiments and variations thereon, it will be understood that numerous additional modifications and variations could be made thereto without departing from the scope of the invention. For example, as explained above, the stack temperature, minimum stack voltage and maximum stack voltage do not remain constant over the stack's lifetime and the relationship between these parameters may not adhere to a predicted behaviour. The actual behaviour may be observed during the stack lifetime, and the set of voltage/power curves may be updated and sent to the wind turbine controller.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

**Claims**

1.  A method of operating a wind-powered electrolysis plant (1) comprising a wind turbine and an electrolyser stack (120), which method comprises the steps of

    - obtaining a mathematical relationship between DC stack voltage ($V_{DC}$) and available wind turbine output power ($P_{WT}$) for each temperature in a range of stack temperatures (ST1, ..., ST6);
    - determining the momentary output power ($P_{WT\_now}$) of the wind turbine;
    - determining the momentary stack temperature ($T_{now}$) of the electrolyser stack (120);
    - identifying the optimum DC stack voltage ($V_{DC\_best}$) for that momentary output power ($P_{WT\_now}$) and momentary stack temperature ($T_{now}$); and
    - regulating a converter arrangement (13) to apply the identified optimum stack voltage ($V_{DC\_best}$) to the electrolyser stack (120).

2.  A method according to the preceding claim, wherein the highest stack temperature (ST6) determines the highest DC stack voltage required during the lifetime of that electrolyser stack (120).

3.  A method according to any of the preceding claims, wherein the mathematical relationships between DC stack voltage ($V_{DC}$) and wind turbine output power ($P_{WT}$) are established on the basis of empirical data.

4.  A method according to any of the preceding claims, wherein the electrolyser stack is one of a plurality of electrolyser stacks (120) of an electrolyser stack arrangement (12), and wherein an optimum stack voltage ($V_{DC\_best\_1}, \dots V_{DC\_best\_n}$) is identified for each electrolyser stack (120).

5.  A method according to any of the preceding claims, wherein the wind turbine is grid-connected, and a portion of the total momentary output power ($P_{WT\_now}$) is exported to the grid when the required stack voltage exceeds the capability of the converter arrangement (13).

6.  A method according to any of the preceding claims, wherein the mathematical relationships are adjusted according to the requirements of further components (121, 122) of the electrolyser stack arrangement (12) during operation of the wind-powered electrolysis plant (1).

7.  A wind-powered electrolysis plant (1) comprising at least

    - a wind turbine comprising a generator (10G);
    - an electrolyser stack arrangement (12) comprising at least one electrolyser stack (120);
    - a converter arrangement (13) configured to convert AC output power of the wind turbine to DC input power for the electrolyser stack (120); and
    - a controller (14) configured to perform the method steps of any of claims 1 to 6 to operate the wind-powered electrolysis plant (1).

8.  A wind-powered electrolysis plant according to the preceding claim, wherein the converter arrangement (13) comprises an AC-DC rectifier (131) adapted to convert AC output power of the generator (10G) to an identified optimum stack voltage ($V_{DC\_best}$).

9. A wind-powered electrolysis plant according to claim 7 or claim 8, wherein the converter arrangement (13) comprises an AC-DC rectifier (131) adapted to convert AC output power of the wind turbine to an interim DC voltage ($V_{DC1}$), and a DC-DC converter (132) adapted to convert the interim DC voltage ($V_{DC1}$) to an identified optimum stack voltage ($V_{DC\_best}$).

10. A wind-powered electrolysis plant according to any of claims 7 to 9, wherein the electrolyser stack arrangement (12) comprises a plurality of electrolyser stacks (120).

11. A wind-powered electrolysis plant according to any of claims 7 to 10, wherein an electrolyser stack (120) is any of a polymer electrolyte membrane electrolyser, a high-pressure PEM electrolyser, a solid oxide electrolyser, an alkaline electrolyser.

12. A wind-powered electrolysis plant according to any of claims 7 to 11, comprising a standby power supply (15) adapted to provide power to the electrolyser stack arrangement (12) in the absence of available wind turbine output power.

13. A wind-powered electrolysis plant according to any of claims 7 to 12, wherein the standby power supply (15) comprises any of: a battery, a super-capacitor, a fuel cell.

14. A wind-powered electrolysis plant according to any of claims 7 to 13, comprising a plurality of wind turbines, and wherein each wind turbine is configured to power an electrolyser stack arrangement (12).

15. A computer program product comprising a computer program that is directly loadable into a memory of a controller (14) of an wind-powered electrolysis plant (1) according to any of claims 7 to 14, and which comprises program elements for performing steps of the method according to any of claims 1 to 5 when the computer program is executed by the controller (14) .

# FIG 1

FIG 2

$P_{WT\_now}$

$T_{now}$

$V_{DC\_best}$

$V_{DC}$

$T_{now}$

FIG 3

## FIG 4

1

131  $V_{DC\_best\_1}$  120

12

10G

$V_{DC\_best\_n}$

131  120

## FIG 5

1

10G

131  $V_{DC1}$  132  $V_{DC\_best\_1}$  120

12

131  $V_{DC1}$  132  $V_{DC\_best\_n}$  120

# FIG 6

$P_{WT\_now}$

14

$T_{now}$

$V_{DC\_best}$

134

$V_{DC}$

15

132

131

120

10G

12

FIG 7

Europäisches Patentamt

European Patent Office

Office européen des brevets

## EUROPEAN SEARCH REPORT

Application Number

EP 22 15 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/162553 A1 (HYGRO TECH BV [NL]) 19 August 2021 (2021-08-19) * the whole document * | 1-15 | INV. C25B1/04 C25B9/70 C25B15/023 |
| A | JP 2020 041202 A (TOSHIBA ENERGY SYSTEM & SOLUTION CORP) 19 March 2020 (2020-03-19) * the whole document * | 1-15 | C25B15/02 G06Q50/00 |
| A | DUTTON A G ET AL: "Experience in the design, sizing, economics, and implementation of autonomous wind-powered hydrogen production systems", INTERNATIONAL JOURNAL OF HYDROGEN ENERGY, ELSEVIER, AMSTERDAM, NL, vol. 25, no. 8, 1 August 2000 (2000-08-01) , pages 705-722, XP004196834, ISSN: 0360-3199, DOI: 10.1016/S0360-3199(99)00098-1 * the whole document * | 1-15 | |
| A | Harrison K. W. ET AL: "The Wind-to-Hydrogen Project: Operational Experience, Performance Testing, and Systems Integration", USDOE, 1 March 2009 (2009-03-01), XP055869915, DOI: 10.2172/951802 Retrieved from the Internet: URL:https://www.nrel.gov/docs/fy09osti/440 82.pdf [retrieved on 2021-12-07] * the whole document * | 1-15 | TECHNICAL FIELDS SEARCHED (IPC) C25B G06Q |

The present search report has been drawn up for all claims

| Place of search | Date of completion of the search | Examiner |
|---|---|---|
| Munich | 13 September 2022 | Juhart, Matjaz |

EPO FORM 1503 03.82 (P04C01)

## ANNEX TO THE EUROPEAN SEARCH REPORT
## ON EUROPEAN PATENT APPLICATION NO.

EP 22 15 6970

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2022

| Patent document cited in search report | Publication date | Patent family member(s) | Publication date |
|---|---|---|---|
| WO 2021162553 A1 | 19-08-2021 | NONE | |
| JP 2020041202 A | 19-03-2020 | JP 7110042 B2<br>JP 2020041202 A | 01-08-2022<br>19-03-2020 |

For more details about this annex : see Official Journal of the European Patent Office, No. 12/82

EPO FORM P0459